# EUROPÄISCHE PATENTSCHRIFT

(11) **EP 3 247 743 B1**
(45) Veröffentlichungstag und Bekanntmachung des Hinweises auf die Patenterteilung: **07.10.2020**
(21) Anmeldenummer: 16700977.8
(22) Anmeldetag: 18.01.2016
(51) Int. Cl.: C08K 5/02, C08G 64/18, C08L 83/10

(54) **FLAMMGESCHÜTZTE, GLASFASER-HALTIGE FORMMASSEN ENTHALTEND SILOXAN-HALTIGES POLYCARBONAT-BLOCKCOKONDENSAT**
FLAME RETARDANT POLYCARBONATE BLOCK COCOONDENSATE CONTAINING SILOXANE COMPRISING MOULDING MATERIAL WITH GLASS FIBRE
MASSES DE FORMAGES IGNIFUGES, CONTENANT DE LA FIBRE DE VERRE COMPRENANT UN CO-CONDENSAT SÉQUENCÉ DE POLYCARBONATE CONTENANT DU SILOXANE

(30) Priorität: 20.01.2015 EP 15151811
(43) Veröffentlichungstag der Anmeldung: 29.11.2017
(73) Patentinhaber: Covestro Intellectual Property GmbH & Co. KG, 51373 Leverkusen (DE)
(72) Erfinder: MEYER, Alexander, 40489 Düsseldorf (DE); HORN, Klaus, 41540 Dormagen (DE); KUHLMANN, Timo, 42799 Leichlingen (DE); ERKELENZ, Michael, 47239 Duisburg (DE); LIESENFELDER, Ulrich, 51469 Bergisch Gladbach (DE)
(74) Vertreter: Levpat
(86) Internationale Anmeldenummer: PCT/EP2016/050913
(87) Internationale Veröffentlichungsnummer: WO 2016/116409

(56) Entgegenhaltungen:
- WO-A1-2008/060724
- WO-A1-2013/067684
- DE-A1-102008 019 503
- US-A- 6 066 700
- US-A1- 2013 267 665
- US-A1- 2013 313 493
- US-A1- 2014 329 920

## Beschreibung

Die vorliegende Erfindung betrifft flammgeschützte, Glasfaser-haltige Formmassen enthaltend Siloxan-haltiges Polycarbonat-Blockcokondensat sowie ein Verfahren zur Herstellung derartiger Formmassen. Die Erfindung betrifft ferner die Verwendung dieser flammgeschützte Formmassen in Spritzguss- und Extrusionsanwendungen.

Es ist bekannt, dass Polysiloxan-Polycarbonat-Blockcokondensate gute Eigenschaften bezüglich der Tieftemperaturschlagzähigkeit bzw. Tieftemperaturkerbschlagzähigkeit, der Chemikalienbeständigkeit und Außenbewitterungsbeständigkeit sowie der Alterungseigenschaften und Flammbeständigkeit aufweisen. Sie sind in diesen Eigenschaften z.T. den herkömmlichen Polycarbonaten (Homopolycarbonat auf Bisphenol-A Basis) überlegen.

Diese Cokondensate werden ausgehend von den Monomeren industriell zumeist über das Phasengrenzflächenverfahren mit Phosgen hergestellt. Ferner ist die Herstellung dieser Siloxan-Cokondensate über das Schmelzeumesterungsverfahren unter Einsatz von Diphenylcarbonat bekannt. Diese Verfahren haben den Nachteil, dass die dazu verwendeten industriellen Anlagen zur Herstellung von Standard-Polycarbonat verwendet werden und deshalb eine große Anlagengröße aufweisen. Die Herstellung spezieller Blockcokondensate ist auf diesen Anlagen wegen des geringeren Volumens dieser Produkte ökonomisch oft nicht sinnvoll. Ferner können die zur Herstellung der Cokondensate benötigten Einsatzstoffe, wie z.B. der Polydimethylsiloxane, die Anlage beeinträchtigen, da sie zu Verschmutzung der Anlage oder der Lösungsmittelkreisläufe führen können. Außerdem werden zur Herstellung giftige Einsatzstoffe wie Phosgen benötigt oder erfordern wie im Schmelzeumesterungsverfahren einen hohen Energiebedarf.

Die Darstellung von Polysiloxan-Polycarbonat-Blockcopolymeren über das Phasengrenzflächenverfahren ist literaturbekannt und beispielsweise in US-PS 3 189 662, US-PS 3 419 634, DE-OS 3 34 782 und EP 122 535 beschrieben.

Die Herstellung von Polysiloxan-Polyorgano-Blockcopolymeren unter Verwendung von Hydroxyaryloxy-funktionellen Siloxanen ist aus US 2013/0267665 bekannt.

Die Darstellung von Polysiloxancarbonat-Blockcopolymeren nach dem Schmelzumesterungsverfahren aus Bisphenol, Diarylcarbonat, silanolendterminierten Polysiloxanen und Katalysator, ist in der US 5 227 449 beschrieben. Als Siloxanverbindungen werden dabei Polydiphenyl- bzw. Polydimethylsiloxan-Telomere mit Silanolendgruppen verwendet. Bekannt ist jedoch, dass derartige Dimethylsiloxane mit Silanolendgruppen im sauren oder basischen Medium mit abnehmender Kettenlänge, im Gegensatz zu Diphenylsiloxan mit Silanolendgruppen, zunehmend zur Selbstkondensation neigen, so dass ein Einbau in das entstehende Copolymer dadurch erschwert ist. Dabei gebildete cyclische Siloxane verbleiben im Polymer und wirken außerordentlich störend bei Anwendungen im Elektrik-/Elektronikbereich.

Nachteilig bei allen diesen Verfahren ist die Verwendung von organischen Lösungsmitteln in mindestens einem Schritt der Synthese der Silicon-Polycarbonat- Blockcopolymeren, die Verwendung von Phosgen als Einsatzstoff oder die ungenügende Qualität des Cokondensats. Insbesondere ist die Synthese der Cokondensate ausgehend von den Monomeren sowohl im Phasengrenzflächenverfahren wie auch vor allem im Schmelzeumesterungsverfahren sehr aufwändig. So müssen z.B. bei Schmelzeverfahren ein geringes Vakuum und geringe Temperaturen angewendet werden, um ein Verdampfen und damit Entfernen der Monomere zu verhindern. Erst in späteren Reaktionsstufen, in denen sich Oligomere mit höherer Molmasse gebildet haben, können niedrigere Drücke und höhere Temperaturen angewendet werden. Dies bedeutet, dass die Reaktion über mehrere Stufen geführt werden muss und die Reaktionszeiten damit entsprechend lang sind.

Um die oben beschriebenen Nachteile zu vermeiden, sind auch Verfahren bekannt, die von kommerziellen Polycarbonaten ausgehen. Dies ist z.B. in US 5414054, US 5821321 und US 6,066,700 beschrieben. Hier wird ein herkömmliches Polycarbonat mit einem speziellen Polydimethylsiloxan in einem Reaktivextrusionsverfahren umgesetzt. Nachteilig an diesen Verfahren ist der Einsatz von hochwirksamen Umesterungskatalysatoren, welche die Herstellung der Cokondensate innerhalb kurzer Verweilzeiten auf einem Extruder ermöglichen. Diese Umesterungskatalysatoren verbleiben im Produkt und können nicht oder nur ungenügend inaktiviert werden. Deshalb weisen Spritzgusskörper aus den so hergestellten Cokondensaten ein ungenügendes Alterungsverhalten, insbesondere ein ungenügendes Thermoalterungsverhalten auf. Ferner müssen spezielle und damit teure Siloxanblöcke eingesetzt werden.

In der DE 19710081 wird ein Verfahren zur Herstellung der genannten Cokondensate in einem Schmelzeumesterungsprozess ausgehend von einem Oligocarbonat und einem speziellen Hydroxyarylsiloxan beschrieben. Auch die Herstellung des Oligocarbonats ist in dieser Anmeldung beschrieben. Allerdings ist die großtechnische Darstellung von Oligocarbonaten zur Herstellung relativ kleinvolumiger spezieller Cokondensate sehr aufwändig. Diese Oligocarbonate weisen relativ niedrige Molekulargewichte und relativ hohe OH-Endgruppenkonzentrationen auf. Häufig weisen diese Oligocarbonate aufgrund ihrer geringen Kettenlänge phenolische OH-Konzentrationen oberhalb von 1000 ppm auf. Derartige Produkte sind kommerziell normalerweise nicht zugänglich und müssten deshalb speziell für die Herstellung der Cokondensate produziert werden. Es ist allerdings nicht wirtschaftlich, großindustrielle Anlagen mit der Produktion kleinvolumiger Vorprodukte zu betreiben. Ferner sind derartige Vorprodukte aufgrund der in diesen Produkten enthaltenen Verunreinigungen wie z.B. Restlösemittel, Restkatalysatoren, nicht reagierte Monomere etc. deutlich reaktiver als hochmolekulare handelsübliche Produkte auf Polycarbonatbasis. Aus diesen Gründen sind entsprechende Vorprodukte oder aromatische Oligocarbonate, die sich für die Herstellung derartiger Blockcokondensate eignen, kommerziell nicht erhältlich. Ferner erlaubt das in DE 19710081 dargestellte Verfahren nicht, dass Blockcokondensat in kurzen Reaktionszeiten darzustellen. Sowohl die Herstellung des Oligocarbonats als auch die Herstellung des Blockcokondensats erfolgt über mehrere Stufen mit Verweilzeiten von insgesamt deutlich über einer Stunde. Desweiteren ist das resultierende Material nicht für die Herstellung von Cokondensaten geeignet, da die hohe Konzentration an OH-Endgruppen sowie sonstige Verunreinigungen, wie z.B. Katalysatorrestbestandteile, zu einer schlechten Farbe im Endprodukt führen.

Polycarbonatzusammensetzungen enthaltend Siloxan-haltige Polycarbonat-Blockcokondensate mit guten Flammschutzeigenschaften sind in der Literatur beschrieben, beispielsweise in US 2014/329920, US 2013/313493, WO 2013/067684 und WO 2008/060724.

Die US 6657018 beschreibt Siloxan-haltige Blockcokondensate. Auch Flammschutzmittel für derartige Materialien werden beschrieben. Die Blockcokondensate in der vorliegenden Anmeldung weisen eine andere Struktur auf und werden nicht wie in US 6657018 herkömmlich im Phasengrenzflächenprozess hergestellt.

Die US 5510414 beschreibt Siloxan-haltige Blockcokondensat-Blends mit Polycarbonat und Glasfasern, die sich durch Transparenz bzw. transluzente Eigenschaften auszeichnen. Demgegenüber geht es hier um opake Zusammensetzungen.

In US 20070072960 werden spezielle Schlagzäh-modifizierte Formassen, die bestimmte vorbehandelte Füllstoffe enthalten beschrieben.

In US 7728059 werden flammgeschützte Polycarbonatblends beschrieben, welche bestimmte synergistische Kombinationen aus verschiedenen Sulfonaten enthalten.

Die vorstehend im Stand der Technik genannten Formmassen bestehen aus Siloxan-haltigen Blockcokondensaten, welche im Phasengrenzflächenverfahren erzeugt wurden. Demgegenüber sind Blockcokondensate spezieller Struktur, welche über herkömmlich zugängliche Polycarbonate erzeugt wurden, Gegenstand der vorliegenden Anmeldung.

Bei Nodera et al. in J. Appl. Pol. Sci. 2006, 102, 1697-1705 ist beschrieben, dass die Siloxandomänengröße einen großen Einfluss auf das Brandverhalten Siloxan-haltiger Blockcokondensate hat. Die von Nodera et al untersuchten Blockcokondensate werden ebenso wie die oben im Stand der Technik zitierten Materialien nach dem Phasengrenzflächenverfahren hergestellt. Die im Schmelzeumesterungsverfahren erzeugten Blockcokondensate, welche ausgehend von kommerziell verfügbaren Polycarbonate hergestellt wurden, weisen andere Siloxan-Domänenverteilungen auf, als die im Phasengrenzflächenverfahren erzeugten Materialien. Deshalb war es nicht naheliegend, dass die in der vorliegenden Anmeldung verwendeten - im Schmelzeumesterungsverfahren erzeugten - Blockcokondensate gute Brandeigenschaften aufweisen.

Ausgehend vom geschilderten Stand der Technik bestand daher die Aufgabe, kostengünstige Formmassen auf Basis Siloxan-haltiger Blockcokondensate herzustellen, die sich durch eine hohe Flammwidrigkeit und hohe Schlagzähigkeit auszeichnen. Kostengünstig meint in diesem Fall, dass die Blockcokondensate nicht über das Phasengrenzflächenverfahren, d.h. unter Einsatz von Phosgen und nicht ausgehend von den Monomeren wie Bisphenol A und Diphenylcarbonat hergestellt werden sollen. Die erfindungsgemäßen Blockcokondensate sollen sich beispielsweise ausgehend von prinzipiell handelsüblichen Polycarbonaten herstellen lassen.

Aufgabe der vorliegenden Erfindung war es ferner, Glasfaser-haltige Polycarbonatzusammensetzungen mit einer Kombination aus hoher Zähigkeit und einer Flammwidrigkeit von UL 94 V-0 bei 1,5 mm Wandstärke zur Verfügung zu stellen.

Aufgabe der vorliegenden Erfindung war es weiterhin, UV-geschützte Zusammensetzungen zur Verfügung zu stellen. Ferner sollen diese Zusammensetzungen eine hohe Schmelzestabilität aufweisen. Eine hohe Schmelzestabilität zu erreichen, ist bei Reaktivextrusions- oder Reactive Blending-Verfahren nicht naheliegend, da es im Gegensatz zur Herstellung von Blockcokondensaten im Phasengrenzflächenverfahren nicht möglich ist, Katalysatoren oder reaktive Nebenprodukte durch Wäsche oder ähnliche Aufarbeitungsschritte zu entfernen. Für eine spätere Verarbeitbarkeit der erfindungsgemäßen Zusammensetzungen in Extrusion oder Spritzguss ist eine hohe Schmelzestabilität essentiell.

Überraschenderweise konnte gezeigt werden, dass Glasfaser-haltige Siloxan-Blockcokondensate hergestellt nach einem Schmelzeumesterungsprozess, welche eine bestimmte Konzentration an PTFE bzw. PTFE-Blend und einem Sulfonsäure-Salz aufweisen und durch einen bestimmten Gehalt eines weiteren Thermoplasten, welcher nicht aus einem Siloxan-haltigen Blockcokondensat besteht, sich durch eine hohe Flammwidrigkeit in Kombination mit hoher Zähigkeit auszeichnen. Ferner konnte gezeigt werden, dass durch Zusatz spezieller UV-Absorber UV-geschützte Formmassen mit hoher Schmelzestabilität zugänglich sind.

Es wurde ferner überraschend gefunden, dass auf diese Weise Zusammensetzungen zugänglich sind, die eine Energieaufnahme im Izod-Kerbschlagversuch bei Raumtemperatur von >25 kJ/m2 sowie eine Gesamtenergieaufnahme im Plattendurchstoßtest (multiaxiale Zähigkeit) von mehr als 35 J aufweisen.

Gegenstand der Erfindung sind somit flammwidrige, thermoplastische Formmassen enthaltend
(A) wenigstens 20 Gew.-% eines Polysiloxan-Polycarbonat-Blockcokondensats umfassend Siloxanblöcke der Struktur (1) 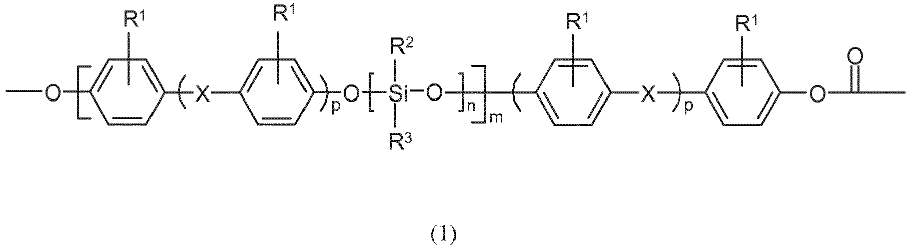 wobei
   R¹ für H, Cl, Br oder C₁ bis C₄-Alkyl, bevorzugt H oder Methyl, besonders bevorzugt H, steht,
   R² und R³ unabhängig voneinander ausgewählt sind aus Aryl, C₁ bis C₁₀-Alkyl und C₁ bis C₁₀-Alkylaryl, vorzugsweise sind R² und R³ Methyl,
   X für eine Einfachbindung, -CO-, -O-, C₁- bis C₆-Alkylen, C₂ bis C₅-Alkyliden, C₅ bis C₁₂-Cycloalkyliden oder C₆ bis C₁₂-Arylen, welches mit einem weiteren aromatischen Ring enthaltend Heteroatome kondensiert sein kann, bevorzugt für eine Einfachbindung, -CO-, -O-, C₁- bis C₅-Alkylen, C₂ bis C₅-Alkyliden oder C₅ bis C₁₂-Cycloalkyliden, besonders bevorzugt für eine Einfachbindung, -O-, Isopropyliden oder C₅ bis C₁₂-Cycloalkyliden, und insbesondere für Isopropyliden steht,
   n für eine durchschnittliche Anzahl von Wiederholungseinheiten von 1 bis 500, bevorzugt 10 bis 400, besonders bevorzugt 10 bis 100, ganz besonders bevorzugt 20 bis 60 steht,
   m für eine durchschnittliche Anzahl von Wiederholungseinheiten von 1 bis 10, bevorzugt 1 bis 6, besonders bevorzugt 2 bis 5 steht, und
   p für 0 oder 1, bevorzugt für 0 steht,
   und das Produkt von n mal m vorzugsweise eine Zahl zwischen 12 und 400, besonders bevorzugt 15 und 200 ist;
(B) 5,0 bis 70,0 Gew.-% wenigstens eines (Co)polycarbonats basierend auf Bisphenol A und gegebenenfalls wenigstens einem weiteren Diphenol,
(C) 8,0 bis 30,0 Gew.-% Glasfasern,
(D) 0,05 bis 10,0 Gew.-% Titandioxid,
(E) 0,03 bis 0,15 Gew.-% Polytetrafluorethylen oder 0,05 bis 0,40 Gew.-%, bevorzugt 0,05 bis 0,30 Gew.-% Polytetrafluorethylen-Blends, welche 30 bis 70 Gew.-% Polytetrafluorethylen enthalten,
(F) 0,1 bis 0,6 Gew.-% wenigstens eines Sulfonsäuresalzes, und
(G) 0,05 bis 0,5 Gew.-% wenigstens eines UV-Absorber.
   Optional enthält die Polymerzusammensetzung ferner
(H) 0,00 Gew.-% bis 1,00 Gew.-%, bevorzugt 0,10 Gew.-% bis 0,75 Gew.-%, besonders bevorzugt 0,15 Gew.-% bis 0,60 Gew.-%, und ganz besonders bevorzugt 0,20 Gew.-% bis 0,50 Gew.-% mindestens eines Entformungsmittels; und/oder
(I) 0,00 Gew.-% bis 0,20 Gew.-%, bevorzugt 0,01 Gew.-% bis 0,10 Gew.-%, eines oder mehrerer Thermo- bzw. Verarbeitungsstabilisatoren, bevorzugt ausgewählt aus der Gruppe der Phosphate, Phosphine, Phosphite und phenolischen Antioxidantien sowie deren Mischungen; und/oder
(J) 0,00 bis 10,00 Gew. -%, bevorzugt 0,10 bis 8,00 Gew.-%, besonders bevorzugt 0,20 bis 3,00 Gew.-% weiterer Additive, welche sich von den Komponenten (B) bis (I) unterscheiden.

Die erfindungsgemäßen Formmassen können zusätzlich zu den Komponenten (A) bis (G) und ggf. einer oder mehrerer der Komponenten (H) bis (J) eine oder mehrere weitere Komponenten enthalten.

In einer bevorzugten Ausführungsform bestehen die Formmassen aus den Komponenten (A) bis (J).

Um den erfindungsgemäßen Effekt zu erreichen, sind mindestens die Komponenten (A) bis (G) nötig.

### Definitionen

"C₁-C₄-Alkyl" steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, "C₁-C₁₀-Alkyl" darüber hinaus beispielsweise für n-Heptyl und n-Octyl, Pinakyl, n-Nonyl, n-Decyl, "C₁-C₃₄-Alkyl" darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

"Aryl" steht für einen carbocyclischen aromatischen Rest mit 6 bis 34 Gerüstkohlenstoffatomen. Gleiches gilt für den aromatischen Teil eines Aiylalkylrestes, auch Aralkylrest genannt, sowie für Arylbestandteile komplexerer Gruppen, wie z.B. Arylcarbonylresten. Beispiele für "C₆-C₃₄-Aryl" sind Phenyl, o-, p-, m-Tolyl, Naphthyl, Phenanthrenyl, Anthracenyl oder Fluorenyl.

"Arylalkyl" bzw. "Aralkyl" bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Im Rahmen der vorliegenden Erfindung beziehen sich die angegebenen Gew.-% der Komponenten (A) bis (J) - soweit nicht explizit anders angegeben - jeweils auf das Gesamtgewicht der Formmasse.

Ferner können in der vorliegenden Erfindung genannte bevorzugte Ausführungsformen miteinander kombiniert werden und sind nicht ausschließlich als alleinstehende Modifikation anzusehen.

### Komponente (A)

Die erfindungsgemäßen Formmassen enthalten als Komponente (A) wenigstens ein Polysiloxan-Polycarbonat-Blockcokondensat umfassend Siloxanblöcke der Struktur (1) und Polycarbonatblöcke.

Insbesondere bevorzugt für die Siloxanblöcke sind Strukturen der Formel (1), in der R² und R³ für Methyl stehen. Ferner sind Strukturen der Formel (1) besonders bevorzugt, in denen R¹ für H, p für 1 und X für Isopropyliden stehen.

Vorzugsweise weisen die im Blockcokondensat enthaltenen Polycarbonatblöcke Struktureinheiten auf, die sich von einem Diphenol der allgemeinen Formel (2) ableiten:

HO-Z-OH (2)

wobei Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (2) für einen Rest der Formel (2a) 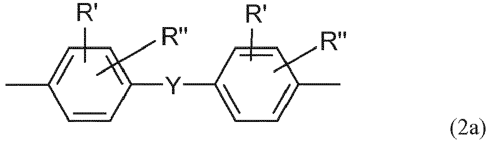 in der
R' und R" unabhängig voneinander für H, C₁-C₁₈-Alkyl, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht.

Bevorzugt steht Y für C₁ bis C₅-Alkylen, C₂ bis C₅-Alkyliden, -O-, -SO-, -CO-, -S-, -SO₂-, Isopropyliden oder Sauerstoff, insbesondere für Isopropyliden.

Geeignete Diphenole der Formel (2) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Ferner bevorzugte Diphenole der Formel (2) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan und 1,3-Bis-[2-(3,5-dimethyl-4-hydroxyphenyl)-2-propyl]-benzol.

Besonders bevorzugte Diphenole der Formel (2) sind 2,2-Bis-(4-hydroxyphenyl)-propan (BPA), und 2,2-Bis-(3-methyl, 4-hydroxyphenyl)-propan.

Die erfindungsgemäß als Komponente (A) vorliegenden Polysiloxan-Polycarbonat-Blockcokondensate können hergestellt werden, indem Hydroxyaryloxy-terminierten Siloxane der Formel (3) 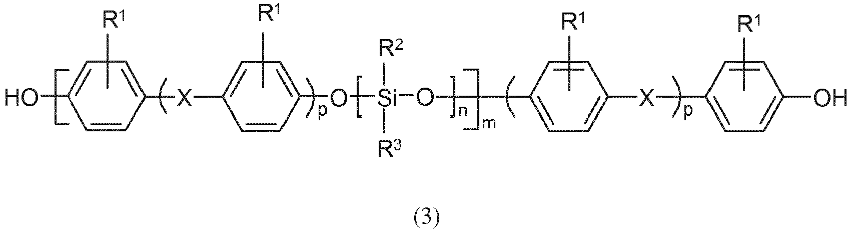 in der R¹, R² und R³, X, n, m und p die bereits für die Formel (1) angegebene Bedeutung haben,
mit herkömmlichen aromatischen Polycarbonaten in der Schmelze bei Temperaturen von 280 °C bis 400 °C, vorzugsweise von 300 °C bis 390 °C, weiter bevorzugt von 320 °C bis 380 °C und ganz besonders bevorzugt von 330 °C bis 370 °C und Drücken von 0,001 mbar bis 50 mbar bevorzugt 0,005 mbar bis 40 mbar, insbesondere bevorzugt 0,02 bis 30 mbar und ganz besonders bevorzugt 0,03 bis 5 mbar, bevorzugt in Gegenwart eines Katalysators, umgesetzt werden.

Die Hydroxyaryloxy-terminierten Siloxane der Formel (3) können gemäß dem in US 2013/0267665 A1 beschriebenen Verfahren erhalten werden.

Zur Herstellung der erfindungsgemäß vorliegenden Polysiloxan-Polycarbonat-Blockcokondensate werden vorzugweise Siloxane der Formel (3) mit einem Molekulargewicht von 3000 bis 20.000 g/mol, besonders bevorzugt 3.500 bis 15.000 g/mol, jeweils bestimmt mittels Gelpermeationschromatographie und BPA Standard, eingesetzt.

Polycarbonate im Sinne der vorliegenden Erfindung sind sowohl Homopolycarbonate als auch Copolycarbonate (auch zusammen bezeichnet als (Co)polycarbonate). Diese können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Zur Herstellung des erfindungsgemäß vorliegenden Polysiloxan-Polycarbonat-Blockcokondensats werden vorzugsweise Polycarbonate mit Molekulargewichten von 16.000 bis 28.000 g/mol, besonders bevorzugt von 17.000 bis 27.000 g/mol und insbesondere bevorzugt von 18.000 bis 26.500 g/mol (gemessen nach BPA-Standard) eingesetzt. Vorzugweise weisen diese Polycarbonate einen Gehalt an phenolischen OH-Gruppen von 250 ppm bis 1000 ppm, bevorzugt 300 bis 900, und insbesondere bevorzugt von 350 bis 800 ppm auf.

Insbesondere werden Polycarbonate auf Basis von Bisphenol A eingesetzt. Ganz besonders bevorzugt enthalten diese Polycarbonate Phenol als Endgruppe. Dabei sind insbesondere solche Polycarbonate zur Herstellung der erfindungsgemäßen Blockcokondensate geeignet, welche nach dem Schmelzeumesterungsverfahren hergestellt wurden. Ganz besonders bevorzugt sind Polycarbonate, deren Herstellung in DE 102008019503 beschrieben ist.

In einer bevorzugten Ausführungsform der erfindungsgemäßen Formmassen weist das Polysiloxan-Polycarbonat-Blockcokondensat eine oder mehrere Umlagerungsstrukturen der Formeln (I) bis (IV) auf, 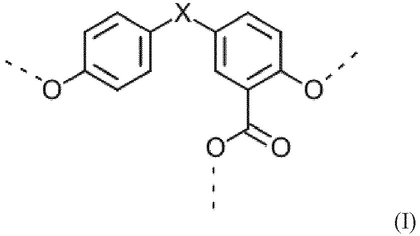 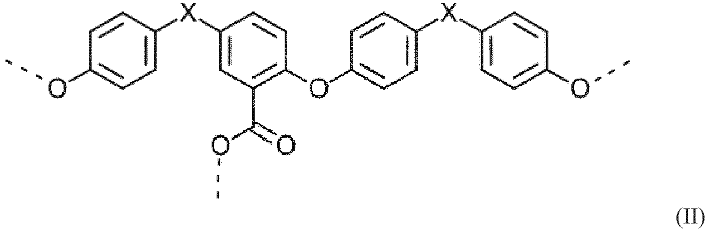 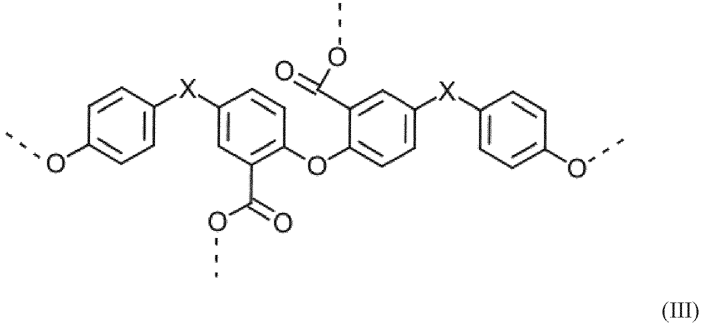 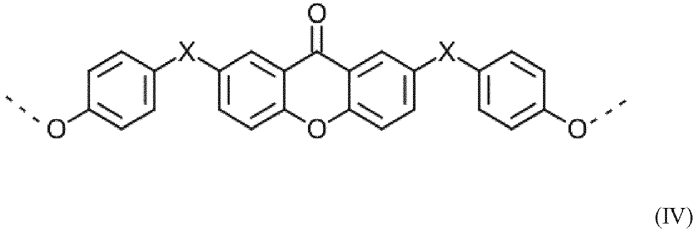 wobei
die Phenylringe unsubstituiert sind oder unabhängig voneinander ein- oder zweifach mit C₁ bis C₈-Alkyl und/oder Halogen, bevorzugt C₁ bis C₄-Alkyl, besonders bevorzugt Methyl substituiert sein können, vorzugsweise aber unsubstituiert vorliegen,
X für eine Einfachbindung, C₁ bis C₆-Alkylen, C₂ bis C₅-Alkyliden oder C₅ bis C₆-Cycloalkyliden, bevorzugt für eine Einfachbindung und C₁ bis C₄ Alkylen und insbesondere bevorzugt für Isopropyliden, steht, und
die durch --- angedeuteten Verknüpfungen in den Struktureinheiten (I) bis (IV) jeweils Teil einer Carboxylgruppe sind;
und wobei die Gesamtmenge der Struktureinheiten (I) bis (IV) vorzugsweise 50 bis 2000 ppm, besonders bevorzugt 50 bis 1000 ppm, insbesondere bevorzugt 80 bis 850 ppm (bestimmt nach Hydrolyse, bezogen auf das in der Zusammensetzung enthaltene Polycarbonat) beträgt.

Die Umlagerungsstrukturen - bzw. mindestens eine dieser Strukturen - (I) bis (IV) sind dabei in die Polymerkette des Blockcokondensats, vorzugweise in die Polycarbonatblöcke, eingebaut.

Um die Menge der Umlagerungsstrukturen zu bestimmen, wird das jeweilige Blockcokondensat einer Totalverseifung unterzogen und so die entsprechenden Abbauprodukte der Formeln (Ia) bis (IVa) gebildet, deren Menge mit HPLC bestimmt wird. (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (Ia) bis (IVa) mittels HPLC mit UV-Detektion bestimmt.

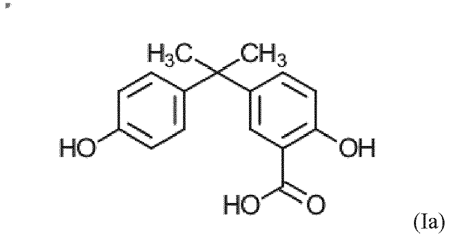

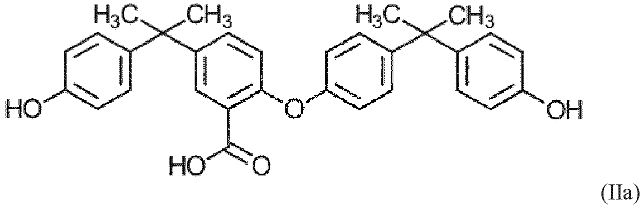

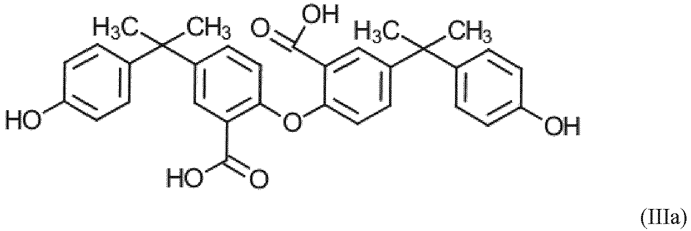

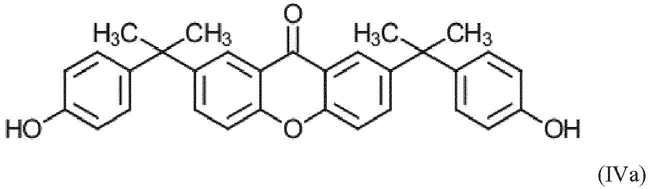

Bevorzugt beträgt die Menge der dabei freigesetzten Verbindung der Formel (Ia) 20 bis 800 ppm besonders bevorzugt 25 bis 700 ppm und insbesondere bevorzugt 30 bis 500 ppm.

Bevorzugt beträgt die Menge der dabei freigesetzten Verbindung der Formel (IIa) 0 (d.h. unterhalb der Nachweisgrenze von 10 ppm) bis 100 ppm besonders bevorzugt 0 bis 80 ppm und insbesondere bevorzugt 0 bis 50 ppm.

Bevorzugt beträgt die Menge der dabei freigesetzten Verbindung der Formel (IIIa) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm.

Bevorzugt beträgt die Menge der dabei freigesetzten Verbindung der Formel (IVa) 0 (d.h. unterhalb der Nachweisgrenze von 10 ppm) bis 300 ppm bevorzugt 5 bis 250 ppm und insbesondere bevorzugt 10 bis 200 ppm.

Aus Gründen der Vereinfachung wird die Menge der Strukturen der Formeln (I) bis (IV) mit der Menge der freigesetzten Verbindungen der Formeln (Ia) bis (IVa) gleichgesetzt.

Die Herstellung von Polycarbonaten enthaltend die Strukturenelemente (I) bis (IV) ist aus DE 102008019503 bekannt.

Vorzugsweise weist das erfindungsgemäß vorliegende Polysiloxan-Polycarbonat-Blockcokondensat eine relative Lösungsviskosität von 1,26 bis 1,40, besonders bevorzugt 1,27 bis 1,38, und ganz besonders bevorzugt 1,28 bis 1,35, bestimmt durch Messung der relativen Lösungsviskosität in Dichlormethan bei einer Konzentration von 5 g/l bei 25 °C mit einem Ubbelohdeviskosimeter, auf.

Vorzugsweise weist das erfindungsgemäß vorliegende Polysiloxan-Polycarbonat-Blockcokondensat ein gewichtsmittleres Molekulargewicht von 26.000 bis 40.000 g/mol, besonders bevorzugt 27.000 bis 38.000 g/mol, und ganz besonders bevorzugt 28.000 bis 35.000 g/mol, jeweils bestimmt durch Messung der relativen Lösungsviskosität in Dichlormethan bei einer Konzentration von 5 g/l bei 25 °C mit einem Ubbelohdeviskosimeter, auf.

Vorzugsweise beträgt die Menge an Polysiloxan-Polycarbonat-Blockcokondensat in den erfindungsgemäßen Formmassen mindestens 20 Gew.-%, besonders bevorzugt mindestens 50 Gew.-%, ganz besonders bevorzugt mindestens 60 Gew.-%.

Vorzugsweise beträgt der Gehalt an Siloxanblöcken der Struktur (1) 2 bis 20 % Gew.-%, bezogen auf das Gesamtgewicht der Formmassen.

Die Werte für n und m in den Siloxanblöcken der Struktur (1) lassen sich mit Hilfe von ¹H-NMR- bzw. ²⁹Si NMR-Spektroskopie bestimmen.

### Komponente (B)

Die erfindungsgemäßen Formmassen enthalten ferner als Komponente (B) ein oder mehrere (Co)polycarbonate basierend auf Bisphenol A und gegebenenfalls wenigstens einem weiteren Diphenol.

Hierfür eignen sich sowohl Homopolycarbonate basierend auf Bisphenol A als auch Copolycarbonate basierend auf Bisphenol A und wenigstens einem weiteren Diphenol, welches sich von Bisphenol A unterscheidet. Diese können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Geeignet sind Copolycarbonate mit Struktureinheiten, die sich von einem die sich von Bisphenol A und einem oder mehreren weiteren Diphenolen der allgemeinen Formel (2), insbesondere der allgemeinen Formel (2a) ableiten, so wie sie bereits im Zusammenhang mit der Komponente (A) beschrieben wurden.

Ganz besonders bevorzugt sind Homopolycarbonate basierend auf Bisphenol A.

Geeignete (Co)polycarbonate weisen vorzugsweise Gewichtsmittelmolekulargewichte Mw (ermittelt durch Gelpermeationschromatographie und Eichung mit Bisphenol A Homopolycarbonat) zwischen 5000 und 200.000 g/mol, vorzugsweise zwischen 10.000 und 80.000 g/mol und besonders bevorzugt zwischen 15.000 und 40.000 g/mol auf. In einer besonderen Ausführungsform werden bevorzugt (Co)polycarbonate mit einem Molekulargewicht Mw zwischen 22.000 und 29.000 g/mol eingesetzt.

### Komponente (C)

Die erfindungsgemäßen Formmassen enthalten ferner Glasfasern (Komponente (C)).

Bevorzugt werden Schnittglasfasern verwendet, die aus M-, E-, A-, S-, R- oder C-Glas herstellt werden, wobei E-, oder C-Glas weiter bevorzugt sind. Der Durchmesser der Fasern beträgt bevorzugt 5 bis 25 µm, weiter bevorzugt 8 bis 20 µm, besonders bevorzugt 11 bis 17 µm.

Die Schnittglasfasern weisen vor Compoundierung bevorzugt eine Länge von 3 mm bis 6 mm auf. Die verwendeten Glasfasern zeichnen sich dadurch aus, dass die Auswahl der Faser durch die Wechselwirkungscharakteristik der Faser mit der Polycarbonatmatrix anbindend oder nichtanbindend ist.
Eine Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Martix herausstehen. Rasterelektronenmikroskopische Aufnahmen zeigen für den umgekehrten Fall der nicht-anbindenen Charakteristik, dass die Glasfasern im Tieftemperaturbruch aus der Matrix stark herausstehen oder vollständig herausgeglitten sind.

Insbesondere bevorzugt werden nicht-anbindende Glasfasern verwendet.

### Komponente (D)

Die erfindungsgemäßen Formmassen enthalten als Komponente (D) Titandioxid.

Als TiO₂-Pigmente sind bevorzugt nach dem Chlorid-Verfahren hergestellte, hydrophobierte, speziell nachbehandelte und für den Einsatz in Polycarbonat geeignete Produkte, z. B. der Handelsprodukte Kronos 2230 (Kronos Titan).

Zu möglichen Oberflächenmodifikationen von Titandioxid zählen anorganische und organische Modifikationen. Hierzu zählen z.B. Oberflächenmodifikationen auf Aluminium- oder Polysiloxanbasis. Eine anorganische Beschichtung kann 0 bis 5 % Siliziumdioxid und/oder Aluminiumoxid enthalten. Eine Modifikation auf organischer Basis kann 0 bis 3 % eines hydrophoben Benetzungsmittels enthalten.

Besonders bevorzugt ist Titandioxid mit der Normbezeichnung R2 gemäß DIN EN ISO 591, Teil 1, welches mit Aluminium- und/oder Siliziumverbindungen stabilisiert ist und einen Titandioxid-Gehalt von mindestens 96,0% aufweist. Derartige Titandioxide sind unter den Markennamen Kronos 2233 und Kronos 2230 erhältlich.

### Komponente (E)

Die erfindungsgemäßen Formmassen enthalten als Komponente (E) 0,03 bis 0,15 Gew.-% Polytetrafluorethylen (PTFE) oder 0,05 bis 0,40 Gew.-%, vorzugsweise 0,05 bis 0,30 Gew.-%, Polytetrafluorethylen-Blends (PTFE-Blends), welche 30 bis 70 Gew.-% Polytetrafluorethylen (bezogen auf den PTFE-Blend) enthalten.

Geeignete PTFE-Blends im Sinne der Erfindung sind alle physikalischen Mischungen von PTFE mit einer Schichtsubstanz welche die PTFE Ketten umhüllt und mit Polycarbonat bzw. Polyestercarbonat und PTFE verträglich ist und die Fibrillenstruktur der PTFE-Ketten innerhalb der Umhüllung unverändert lässt. Geeignete Substanzen sind beispielsweise Polyvinylderivate, bevorzugt Styrolacrylnitril (SAN) und Polyacrylate. In diesen Blends liegt PTFE in Anteilen von 30 bis 70 Gew.-%, bevorzugt von 40-60 Gew.%, besonders bevorzugt von 40 bis 55 Gew. % vor. Solche Blends sind kommerziell erhältlich beispielsweise unter den Handelsnamen Blendex^{(R)} B449 (ca. 50% PTFE und ca. 50 % SAN [aus 80 % Styrol und 20 % Acrylnitril]) der Firma Chemtura oder Metablen^{(R)} A-3800 (ca. 40% PTFE CAS 9002-84-0 und ca. 60 % Methylmethacrylat/Butylacrylat Copolymer CAS 25852-37-3) von Misubishi Rayon. Die Präparation der Blends erfolgt durch die Vermischung einer PTFE-Emulsion mit einer Emulsion des geeigneten Blendpartners. Aus der erhaltenen Mischung wird durch ein geeignetes Verfahren wie Coagulation, Gefriertrocknung, Sprühtrocknung der Blend gewonnen. Erfindungsgemäß werden PTFE-Blends in einer Menge von 0,05 bis 0,40 Gew.-%, bezogen auf die Formmasse, eingesetzt.

Reines PTFE wird in Pulverform in einer Menge von 0,03 bis 0,15 Gew.-%, bezogen auf das Gesamtgewicht der Formmasse, eingesetzt. Geeignete, in Pulverform einsetzbare Tetrafluorethylenpolymerisate weisen vorzugsweise einen mittleren Teilchendurchmesser von 100 bis 1000 µm und Dichten von 2,0 g/ cm³ bis 2,3 g/ cm³ auf. Geeignete Polytetrafluorethylen -Pulver sind handelsübliche Produkte und werden beispielsweise von der Fa. DuPont unter dem Handelsnamen Teflon^{(R)} angeboten.

### Komponente (F)

Die erfindungsgemäßen Formmassen enthalten als Komponente (F) ein oder mehrere Sulfonsäuresalze.

Bevorzugt sind die Alkali- und Erdalkalimetallsalze der organischen Sulfonsäuren, wie beispielsweise Diphenylsulfon-3 -sulfonsäure, Diphenylsulfon-3,3' -disulfonsäure, Naphthalintrisulfonsäure, para-Toluolsulfonsäure, 2,5-Dichlorbenzolsulfonsäure und 2,4,5-Trichlorbenzolsulfonsäure.

Geeignete Sulfonsäuresalze sind insbesondere solche der allgemeinen Formeln (4) und (5): 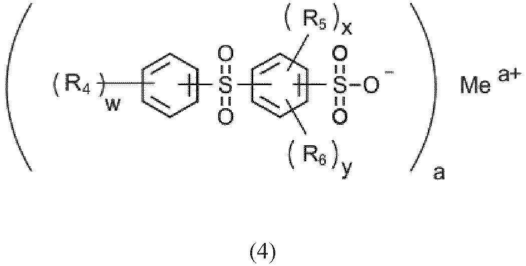 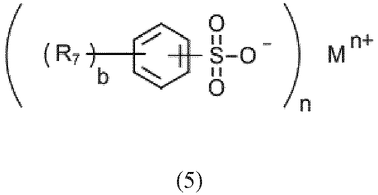 wobei
R₄, R₅, R₆ und R₇ jeweils unabhängig voneinander für einen C₁ bis C₆-Alkylrest stehen, insbesondere bevorzugt ausgewählt aus der Gruppe bestehend aus Methyl, Ethyl, Propyl und Butyl;
Me und M jeweils für ein Metall, bevorzugt Natrium oder Kalium, stehen;
a und n für 1, 2 oder 3 stehen,
b und w ganze Zahlen von 0 bis 5 sind, und
x und y für ganze Zahlen von 0 bis 4 stehen.

Besonders bevorzugte Sulfonsäuresalze der Formeln (4) und (5) sind Diphenylsulfonsulfonat-Kaliumsalz und Natrium-p-toluolsulfonat (p-Toluolsulfonsäure-Natriumsalz).

### Komponente (G)

Erfindungsgemäß enthalten die Formmassen als Komponente (G) ein oder mehrere UV-Absorber.

Geeignete UV-Absorber sind beispielsweise beschrieben in der EP 1 308 084 A1, in der DE 102007011069 A1 sowie in der DE 10311063 A1.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), 2-(2'-Hydroxy-3'-(2-butyl)-5'-(tert.butyl)-phenyl)-benzotriazol (Tinuvin® 350, BASF SE, Ludwigshafen), Bis-(3-(2H-benztriazolyl)-2-hydroxy-5-tert.-octyl)methan, (Tinuvin® 360, BASF SE, Ludwigshafen), (2-(4,6-diphenyl-1,3,5-triazin-2-yl)-5-(hexyloxy)-phenol (Tinuvin® 1577, BASF SE, Ludwigshafen), sowie der Benzophenone 2,4-Dihydroxy-benzophenon (Chimasorb® 22 , BASF SE, Ludwigshafen) und 2-Hydroxy-4-(octyloxy)-benzophenon (Chimassorb® 81, Ciba, Basel), 2-Propensäure, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF SE Ludwigshafen), 2-[2-hydroxy-4-(2-ethylhexyl)oxy]phenyl-4,6-di(4-phenyl)phenyl-1,3,5-triazin (Tinuvin® 1600, BASF SE, Ludwigshafen) oder Tetra-ethyl-2,2'-(1,4-phenylene-dimethylidene)-bismalonat (Hostavin® B-Cap, Clariant AG). Es können auch Mischungen dieser Ultraviolett-Absorber eingesetzt werden.

Insbesondere bevorzugte UV-Absorber sind 2-(2'-Hydroxy-5'-(tert.-octyl)-phenyl)-benzotriazol (Tinuvin® 329, BASF SE, Ludwigshafen), Bis-(3-(2H-benztriazolyl)-2-hydroxy-5-tert.-octyl)methan, (Tinuvin® 360, BASF SE, Ludwigshafen) und 2-(3',5'-Bis-(1,1-dimethylbenzyl)-2'-hydroxy-phenyl)-benzotriazol (Tinuvin® 234, BASF SE, Ludwigshafen) und Bis-(1,1-dimethylbenzyl)-2'-hydroxyphenyl)-benzotriazol, wobei 2-(3',5'-Bis-(1,1-dimethylbenzyl)-2'-hydroxy-phenyl)-benzotriazol ganz besonders bevorzugt ist.

Die UV-Absorber werden in einer Menge von 0,05 Gew.-% bis 0,50 Gew.-%, besonders bevorzugt 0,10 Gew.-% bis 0,50 Gew.-% und insbesondere bevorzugt 0,10 Gew.-% bis 0,30 Gew.-%, in den erfindungsgemäßen Formmassen eingesetzt.

### Komponente (H)

In einer bevorzugten Ausführungsform enthalten die erfindungsgemäßen Formmassen als Komponente (H) ein oder mehrere Entformungsmittel.

Als Entformungsmittel eignen sich Ester aliphatischer langkettiger Carbonsäuren mit ein- oder mehrwertigen aliphatischen und/oder aromatischen Hydroxy-Verbindungen.

Besonders bevorzugt verwendete aliphatische Carbonsäureester sind Verbindungen der allgemeinen Formel (6):

(R⁸-C(=O)-O)ₒ-R⁹-(OH)ₚ (6)

wobei
o für eine Zahl von 1 bis 4 steht,
p für eine Zahl von 0 bis 3 steht,
R⁸ ein aliphatischer, gesättigter oder ungesättigter, linearer, cyclischer oder verzweigter Alkylrest, vorzugsweise C₁₂-C₃₀-Alkylrest, ist und
R⁹ ein Alkylenrest, vorzugsweise C₂-C₂₀-Alkylenrest, eines 1- bis 4-wertigen aliphatischen Alkohols R⁹-(OH)ₒ₊ₚ ist.

Bei Estern von mehrwertigen Alkoholen können auch freie, nicht veresterte OH-Gruppen vorhanden sein.

Erfindungsgemäß geeignete aliphatische Carbonsäureester sind z.B.: Glycerinmonostearat, Palmitylpalmitat und Stearylstearat. Es können auch Gemische verschiedener Carbonsäureester der Formel (6) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Stearylstearat und Propandioldistearat, bzw. Gemische, daraus und am stärksten bevorzugt Pentaerythrittetrastearat.

Erfindungsgemäß geeignete aliphatische Carbonsäureester sind beispielsweise Glycerinmonostearat, Palmitylpalmitat und Stearylstearat. Es können auch Gemische verschiedener Carbonsäureester eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und deren Gemische.

Besonders bevorzugt sind Pentaerythrittetrastearat, Stearylstearat und Propandioldistearat, und deren Gemische. Ganz besonders bevorzugt ist Pentaerythrittetrastearat.

Die Entformungsmittel werden vorzugsweise in Konzentrationen von 0,00 Gew.-% bis 1,00 Gew.-%, bevorzugt 0,10 Gew.-% bis 0,75 Gew.-%, besonders bevorzugt 0,15 Gew.-% bis 0,60 Gew.-%, und ganz besonders bevorzugt 0,20 Gew.-% bis 0,50 Gew.-%, bezogen auf das Gewicht der Formmasse, verwendet.

### Komponente (I)

In einer weiteren bevorzugten Ausführungsform enthalten die erfindungsgemäßen Formmassen als Komponente (I) ein oder mehrere Thermo- und/oder Verarbeitungsstabilisatoren, vorzugsweise ausgewählt aus der Gruppe der Phosphate, Phosphine, Phosphite und phenolischen Antioxidantien sowie deren Mischungen. Diese werden vorzugsweise in einer Menge von 0,01 Gew.-% bis 0,10 Gew.-%, bezogen auf das Gewicht der Formmassen, eingesetzt.

Geeignete Thermostabilisatoren sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di-cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butyl)phenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan und Trinaphthylphosphin.

Insbesondere bevorzugt werden Triphenylphosphin (TPP), Irgafos® 168 (Tris(2,4-di-tert-butylphenyl)-phosphit) und Tris(nonylphenyl)phosphit oder deren Mischungen eingesetzt.

Als Thermostabilisatoren können ferner phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Ferner können Verarbeitungsstabilisatoren auf Phosphatbasis eingesetzt werden. Das Phosphat hat dabei bevorzugt die folgende Struktur (7) 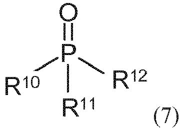 wobei R¹⁰, R¹¹ und R¹² unabhängig voneinander für H, gleiche oder unterschiedliche lineare, verzweigte oder zyklische Alkylreste, vorzugsweise C₁-C₁₈-Alkylreste, stehen können.

Geeignete Phosphate sind z. B. Mono-, Di- und Trihexylphosphat, Triisooctylphosphat und Trinonylphosphat.

Bevorzugt wird als Phosphat Triisooctylphosphat (Tris-2-ethyl-hexyl-phosphat) verwendet. Es können auch Mischungen aus verschiedenen Mono-, Di- und Trialkylphosphaten verwendet werden.

Die Phosphate können optional in Mengen von weniger als 0,05 Gew.-%, bevorzugt von 0,00005 Gew.-% bis 0,05 Gew.-%, besonders bevorzugt 0,0002 bis 0,05 Gew.-%, ganz besonders bevorzugt von 0,0005 Gew.-% bis 0,03 Gew.-% und insbesondere von 0,001 bis 0,0120 Gew.-%, bezogen auf das Gesamtgewicht der Formmasse, eingesetzt werden.

### Komponente (J)

Die erfindungsgemäßen Formmassen können weitere Additive, vorzugsweise in Mengen von 0,10 bis 8,00 Gew.-%, besonders bevorzugt 0,20 bis 3,00 Gew.-% enthalten.

Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, anorganischen Pigmente, Farbmittel, Entformungsmittel oder Verarbeitungshilfsmittel. Die bereits als Komponenten (A) bis (I) der vorliegenden Erfindung offenbarten Substanzen sind in diesem Zusammenhang ausdrücklich nicht Bestandteil der Komponente (J).

Im Rahmen der Komponente (J) können Farbmittel enthalten sein.

Geeignete Farbmittel sind beispielsweise Ruß, Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyanin-abgeleitete Farbstoffe wie Kupfer-Phthalocyanin Blau und Kupfer Phthalocyanin Grün, kondensierte polycyclische Farbstoffe und Pigmente wie Azo-basierende (z.B. Nickel-Azogelb), Schwefel-Indigo-Farbstoffe, Perynonbasierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme.

Konkrete Beispiele für Handelsprodukte sind z.B. MACROLEX® Blau RR, MACROLEX® Violett 3R, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF SE, Deutschland).

Von diesen sind Cyaninderivate, Chinolinderivate, Anthrachinonderivate, Phthalocyaninderivate und Perinonderivate bevorzugt.

Im Rahmen der Komponente (J) können Flammschutzmittel eingesetzt werden. Derartige Flammschutzmittel die gegebenenfalls in den erfindungsgemaessen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithium-phenylphosphonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kaliummetaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz. Ebenfalls können Mischungen der genannten Salze eingesetzt werden.

### Herstellung der Formmassen

Die Herstellung der erfindungsgemäßen Formmassen enthaltend die Komponenten (A) bis (G) und ggf. eine oder mehrere der Komponenten (H) bis (J) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgen das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Formmassen durch bekannte Verfahren oder als Masterbatch eingebracht werden.

In diesem Zusammenhang können die einzelnen Komponenten der Formmassen in üblichen Vorrichtungen wie Schneckenextrudern (zum Beispiel Zweischneckenextruder, ZSK), Knetern, Brabender- oder Banbury-Mühlen zusammengeführt und vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Formmassen können zu Erzeugnissen oder Formkörpern verarbeitet werden, in dem man beispielsweise die Formmassen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Formmassen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Zur Extrusion wird die gegebenenfalls z.B. mittels Trocknung vorbehandelte Formmasse dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Zusammensetzung notwendigen Temperaturen eingestellt, wobei üblicherweise den Herstellerangaben gefolgt werden kann. Enthalten die Formmassen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast: "Kunststoff-Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind bekannt und im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Spritzgiessen ist ein Umformverfahren, welches in der Kunststoffverarbeitung eingesetzt wird.

Mit diesem Verfahren lassen sich wirtschaftlich direkt verwendbare Formteile in großer Stückzahl herstellen. Dazu wird mit einer Spritzgießmaschine der jeweilige Werkstoff, beziehungsweise die Formmasse, in einer Spritzeinheit plastifiziert und in ein Spritzgießwerkzeug eingespritzt. Der Hohlraum, die Kavität, des Werkzeugs bestimmt die Form und die Oberflächenstruktur des fertigen Bauteils.

Spritzguss umfasst hier alle Spritzgießverfahren einschließlich Mehrkomponentenspritzguss und Spritzprägeverfahren.

Zur Herstellung von Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgiessteilen verwendet, bei welchen kurze Fliesswege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrösserte Kavität vorhanden. Tauchkanten des Werkzeuges garantieren auch bei etwas geöffneten Formplatten noch eine ausreichende Dichtigkeit der vorvergrösserten Kavität. Die Kunststoffmasse wird in diese vorvergrösserte Kavität eingespritzt und währenddessen bzw. anschliessend unter Ausführung einer Werkzeugbewegung in Schliessrichtung verpresst. Insbesondere bei der Herstellung von grossflächigen und dünnwandigen Formteilen mit langen Fliesswegen ist die aufwändigere Spritzprägetechnik bevorzugt oder ggf. zwingend erforderlich. Nur auf diese Weise wird eine Reduzierung der bei grossen Formteilen benötigten Spritzdrücke erreicht. Ferner können Spannungen bzw. Verzug im Spritzgiessteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Vorzugsweise weisen aus den erfindungsgemäßen Formmassen hergestellte Spritzgussartikel eine UL 94 V0 Einstufung bei einer Dicke von 1,5 mm sowie eine Energieaufnahme im Izod-Kerbschlagversuch, gemessen nach ISO 180-A z.B. nach ISO 180 / 1A bei 23°C, von >25 kJ/m² auf (bei 3 mm Probendicke).

Erfindungsgemäß bevorzugte Erzeugnisse, Formkörper oder geformte Gegenstände sind Platten, Folien, Rohre, Verscheibungen, beispielsweise Autofenster, Fenster von Schienen- und Luftfahrzeugen, Autosonnendächer, Sicherheitsscheiben, Bedachungen oder Gebäudeverglasungen, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, Ampelgehäuse, Ampelabdeckungen, Ampellinsen, die die erfindungsgemäßen Formmassen enthalten. Dabei können neben Massivplatten auch Doppelstegplatten oder Multistegplatten verwendet werden. Als weitere Komponenten der erfindungsgemäßen Erzeugnisse neben den erfindungsgemäßen Formmassen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Formmassen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Beispiele:

Materialien zur Herstellung der Zusammensetzungen und entsprechenden Probekörper:

### Komponente (A)

Polysiloxan-Polycarbonat-Blockcokondensat (im Folgenden auch Si-PC) enthaltend Bisphenol A Homopolycarbonat-Blöcke und Siloxanblöcke der allgemeinen Formel (1) mit R¹ = H, R², R³ = Methyl, p = 0, n im Bereich 30 bis 35 und m im Bereich von 3,5 bis 4,0. Die relative Lösungsviskosität des Blockcokondensats beträgt 1,26 (bestimmt bei einer Konzentration von 5 g/l in Dichlormethan bei 25°C mit einem Ubbelohde-Viskosimeter).

Das Blockcokondensat wurde nach einem Schmelzeumesterungsverfahren aus einem Bisphenol A Homopolycarbonat und einem Siloxan hergestellt. Dabei wurden die folgenden Komponenten eingesetzt:
Polycarbonat-Komponente: Lineares Bisphenol-A-Homopolycarbonat mit Endgruppen basierend auf Phenol mit einer Schmelze-Volumenrate MVR von ca. 59 cm³/10 min (gemessen bei 300 °C und 1,2 kg Belastung gemäß ISO 1033), hergestellt nach einem Schmelzeumesterungsprozess wie in DE 102008019503 beschrieben. Diese Komponente weist Umlagerungsstrukturen der Formeln (I), (II), (III) und (IV) auf. Der Gehalt an Umlagerungsstrukturen kann durch Bestimmung der Mengen der entsprechenden Abbauprodukte (Ia) bis (IVa) nach Totalverseifung mit Hilfe von Natriummethylat unter Rückfluss festgestellt werden. Es wurden die folgenden Abbauprodukte mittels HPLC mit UV-Detektion gefunden: (Ia): 142 ppm; (IIa): < 10 ppm, (IIIa): <10 ppm, (IVa): 23 ppm.
Siloxan-Komponente: Hydrochinon-terminertes Polydimethylsiloxan der Formel (I) (d.h. R¹ = H, R² = Methyl, p = 0) mit n im Bereich 30 bis 35 und m im Bereich von 3,5 bis 4,0; hergestellt wie in US 2013/0267665 A1, Beispiel 1 beschrieben.

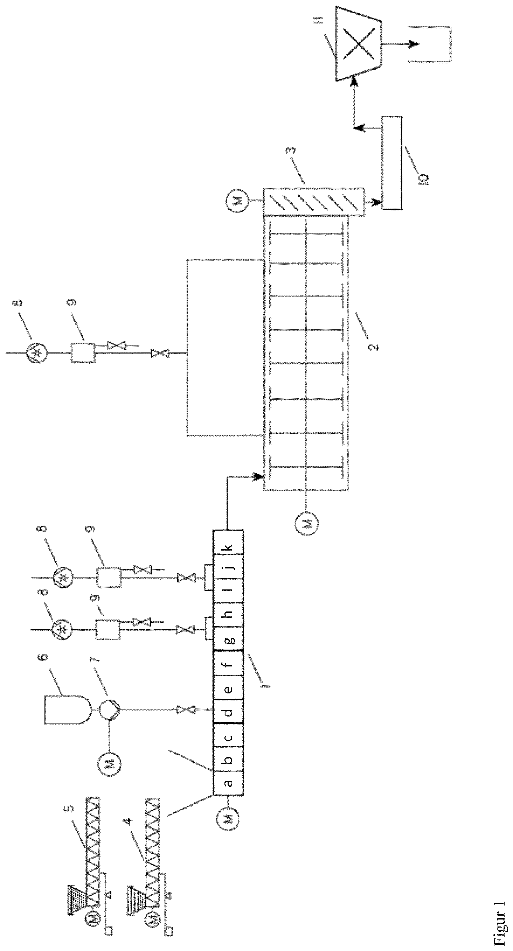

Die Herstellung des Blockcokondensats aus der Polycarbonat-Komponente und der Siloxan-Komponente erfolgt über ein Reaktivextrusionsverfahren:
Das Schema des Versuchsaufbaus ist Figur 1 zu entnehmen.

Figur 1 zeigt ein Schema zur Herstellung der Siloxan-haltigen Blockcokondensate. Polycarbonat und ein Katalysator-Masterbatch (s.u.) werden über die gravimetrischen Zuführungen (4) und (5) auf den Doppelschneckenextruder (1) dosiert. Der Extruder (Typ ZSE 27 MAXX von Fa. Leistritz Extrusionstechnik GmbH, Nürnberg) ist ein gleichsinnig drehender Zweischneckenextruder mit Vakuumzonen zur Abtrennung der Brüden. Der Extruder besteht aus 11 Gehäuseteilen (a bis k) - siehe Figur 1. Im Gehäuseteil a erfolgt die Zugabe von Polycarbonat sowie Katalysatormasterbatch sowie im Gehäuseteil b und c das Aufschmelzen dieser Komponenten. Im Gehäuseteil d erfolgt die Zugabe der flüssigen Silikonkomponente. Die Gehäuseteile e und f dienen der Einmischung der flüssigen Silikonkomponente. Die Gehäuseteile g, h, i und j sind mit Entgasungsöffnungen versehen, um die Kondensationsprodukte zu entfernen. Die Gehäuseteile g und h sind der ersten und die Gehäuse i und j der zweiten Vakuumstufe zugeordnet. Das Vakuum in der ersten Vakuumstufe betrug zwischen 250 und 500 mbar Absolutdruck. Das Vakuum in der zweiten Vakuumstufe beträgt weniger als 1 mbar. Das Siloxan wird in einem Tank (6) vorgelegt und über eine Dosierpumpe (7) auf den Extruder gegeben. Das Vakuum wird über 2 Vakuumpumpen (8) generiert. Die Brüden werden vom Extruder weggeführt und in 2 Kondensatoren aufgefangen (9). Die so entgaste Schmelze wird über eine Leitung vom Gehäuseteil k des Zweischneckenextruders auf einen Hochviskosreaktor (2) geführt.

Bei dem Hochviskosreaktor (2) handelt es sich um einen selbstreinigenden Apparat mit zwei gegenläufigen, horizontal und achsparallel angeordneten Rotoren. Der Aufbau ist in der europäischen Patentanmeldung EP460466 beschrieben, siehe dort Fig.7. Die verwendete Maschine hat einen Rotordurchmesser von 187 mm bei einer Länge von 924 mm. Der gesamte Innenraum des Reaktors hat ein Volumen von 44,6 Litern. Dem Hochviskosreaktor ist ebenfalls an eine Vakuumpumpe (8) und an einen Kondensator (9) angeschlossen. Das am Hochviskosreaktor anliegende Vakuum beträgt 0,1 bis 5 mbar. Nach Abschluss der Reaktion wird das Blockcokondensat über eine Austragsschnecke abgeführt und anschließend granuliert (über Wasserbad (10) und Granulator (11)). Das Molekulargewicht des Blockcokondensats wird über den Durchsatz gesteuert. Der Durchsatz in der Extruder/Hochviskosreaktorkombination wird so eingestellt, dass sich ein Lösungsviskosität des Blockcokondensats von eta rel 1,26 ergibt (bestimmt bei einer Konzentration von 5 g/l in Dichlormethan bei 25°C mit einem Ubbelohde-Viskosimeter).

Das zur Herstellung des Blockcokondensat nötige Katalysatormasterbatch wird wie folgt hergestellt:
Der Katalysator ist Tetraphenylphosphoniumphenoxid der Firma Rhein Chemie Rheinau GmbH (Mannheim, Germany). Der Katalysator wird in Form eines Masterbatch eingesetzt. Tetraphenylphosphoniumphenoxid wird als Co-Kristall mit Phenol verwendet und enthält ca. 70% Tetraphenylphosphoniumphenoxid. Die unten genannten Gehalte beziehen sich auf das Produkt der Firma Rhein Chemie (d.h. in Form des Co-Kristalls mit Phenol).

Das Masterbatch wird in Form einer 0,25 % Verdünnung angewendet. Hierfür werden 4982 g Polycarbonat mit 18 g of Tetraphenylphosphoniumphenoxid (in oben beschriebener Form) in einem Rhönradmischer für 30 Minuten vermengt. Das Masterbatch wird im Verhältnis 1 : 10 dosiert, so dass der Katalysatorgehalt 0,025 Gew.-% bezogen auf das eingesetzte Polycarbonat beträgt.

### Komponente (B)

PC-1: Lineares Bisphenol-A-Homopolycarbonat mit Endgruppen basierend auf Phenol mit einer Schmelze-Volumenrate MVR von 9,0 cm³/10 min (gemessen bei 300 °C und 1,2 kg Belastung gemäß ISO 1033).
PC-2: Lineares Bisphenol-A-Homopolycarbonat mit Endgruppen basierend auf Phenol mit einer Schmelze-Volumenrate MVR von 6 cm³/10 min (gemessen bei 300 °C und 1,2 kg Belastung gemäß ISO 1033).

### Komponente (C)

Geschnittene Kurzglasfasern (nicht anbindend) der Firma 3B mit einem durchschnittlichen Faserdurchmesser von 14 µm und einer durchschnittlichen Faserlänge von 4,0 mm.

### Komponente (D)

Titandioxid: Kronos® 2230 der Firma Kronos (Titandioxid mit der Normbezeichnung R2 gemäß DIN EN ISO 591 - 1, welches mit Aluminium- und Silizium- und Silikonverbindungen stabilisiert ist, einen Titandioxid-Gehalt von mindestens 96,0% aufweist und ein nach dem Chloridverfahren hergestelltes Rutilpigment ist).

### Komponente (E)

Blendex B449 (ca. 50% PTFE und ca. 50 % SAN [aus 80 % Styrol und 20 % Acrylnitril] der Firma Chemtura.

### Komponente (F)

Diphenylsulfonsulfonat-Kaliumsalz: Produktname KSS-FR der Firma Brenntag GmbH, Deutschland.

### Komponente (G)

Als UV-Absorber wird Tinuvin® 234 (Bis-(1,1-dimethylbenzyl)-2'-hydroxy-phenyl)-benzotriazol, BASF SE, Ludwigshafen) oder Tinuvin® 329 (2-(2'-Hydroxy-5'-(tert.-octyl)-phenyl)-benzotriazol, BASF SE, Ludwigshafen) eingesetzt.

### Komponente (I)

Als Thermostabilisator wird Irgafos® 168 (Tris(2,4-di-tert-butyl-phenyl)-phosphit, CAS 31570-04-4, BASF SE, Ludwigshafen) eingesetzt.

### Komponente (J)

### Farbmittel

Als Farbmittel wird Ruß (Partikelgröße ca . 17 nm) in Form von Black Pearls® 800 (CAS-No. 1333-86-4) der Firma Cabot Corp. eingesetzt.

### Flammschutzmittel

Als optionales Flammschutzmittel wird Kaliumperfluor-1-butansulfonat kommerziell erhältlich als Bayowet® C4 der Firma Lanxess, Leverkusen, Deutschland, CAS-Nr. 29420-49-3 eingesetzt.

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 280°C und einer Drehzahl von 150 Upm mit den in Beispielen angegebenen Mengen an Additiven.

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 80 °C zu entsprechenden Formkörpern verarbeitet. Dabei werden die in Tabelle 1 angegebenen Einsatzstoffe in den angegebenen Konzentrationen eingesetzt.

Das Brandverhalten wird nach UL 94V an Stäben der Abmessung 127 mm x 12,7 mm x 3,0 mm und an Stäben der Abmessung 127 x 12,7 x 1,5 mm gemessen.

Anschließend wurden 2 Sets von je 5 UL Probekörpern der oben angegebenen Dicke analog UL94V vermessen. Ein Set wurde nach 48 Stunden Lagerung bei 50% rel. Luftfeuchtigkeit und 23°C gemessen. Ein weiteres Set wurde nach 7 Tagen Lagerung bei 70°C im Warmluftofen gemessen. (Insgesamt wurden jeweils 10 UL Probekörper getestet.)

Die mechanischen Eigenschaften (Izod-Kerbschlag gemessen nach ISO 180 / 1A; 23 °C; an 80 x 10 x 3 mm Stäben) werden an jeweils 10 Teststäbe bestimmt.

Untersuchung des Deformations- und Bruchverhalten: Plattendurchstoßversuch mit 23 kg Fallmasse und einer Auftreffgeschwindigkeit von 4.2 m/s mit einem Fallwerk IFW 420 der Fa. RoellAmsler bei Raumtemperatur (21°C), der Dorndurchmesser lag bei 20 mm, der Auflagerdurchmesser bei 40 mm. Die Plattendicke betrug 3,0 mm.

Die Schmelzestabilität wird über den MVR nach ISO 1133 (300 °C; 1.2 kg) nach verschiedenen Verweilzeiten gemessen (s. Tabelle 2).

Beispiele 1 bis 3 sind Vergleichsbeispiele, Beispiel 4 und 5 sind erfindungsgemäße Beispiele. Beispiel 6 enthält kein Siloxan-basiertes Blockcokondensat (nur auf Basis von Polycarbonat) und dient zu Vergleichszwecken.

Die erfindungsgemäßen Beispiele 4 und 5 sowie die Vergleichsbeispiele 1 bis 3 und 6 werden mit den in Tabelle 1 angegebenen Additiven und Rohstoffen in den jeweils angegebenen Konzentrationen (in Gew.-%) unter den oben angegebenen Bedingungen hergestellt.

**Tabelle 1:**

| Komponente | Beispiel 1 (Vergleich) | Beispiel 2 (Vergleich) | Beispiel 3 (Vergleich) | Beispiel 4 | Beispiel 5 | Beispiel 6 (Vergleich) |
|---|---|---|---|---|---|---|
| (A) Si-PC | 86,0 | 86,0 | 86,0 | 71,0 | 71,0 | - |
| (B) PC 1 | - | - | - | 15,0 | 15,0 | 86,0 |
| (B) PC 2 | 3,15 | 3,00 | 3,40 | 2,95 | 1,89 | 3,15 |
| (C) | 9,0 | 9,0 | 9,0 | 9,0 | 9,0 | 9,0 |
| (D) | 1,0 | 1,0 | 1,0 | 1,0 | 2,0 | 1,0 |
| (E) | - | 0,15 | 0,20 | 0,30 | 0,30 | - |
| (F) | 0,30 | 0,30 | - | 0,20 | 0,20 | 0,30 |
| (G) Tinuvin 329 | 0,20 | 0,20 | - | - | - | 0,20 |
| (G) Tinuvin 234 | - | - | 0,20 | 0,20 | 0,20 | - |
| (I) | 0,05 | 0,05 | 0,05 | 0,05 | 0,05 | 0,05 |
| (J) Ruß | 0,30 | 0,30 | 0,15 | 0,30 | 0,30 | 0,30 |
| (J) Kaliumperfluor-1-butansulfonat | - | - | - | - | 0,06 | - |

**Tabelle 2:**

| | Bsp. 1 (Vergleich) | Bsp. 2 (Vergleich) | Bsp. 3 (Vergleich) | Bsp. 4 | Bsp. 5 | Bsp. 6 (Vergleich) |
|---|---|---|---|---|---|---|
| MVR in [cm³/10 min] 300 °C, 5 min | 10,3 | 10,5 | 9,1 | 7,2 | 7,3 | 8,9 |
| MVR in [cm³/10 min] 300 °C, 20 min | 11,9 | 12,1 | 9,9 | 7,9 | 7,9 | 9,6 |
| MVR in [cm³/10 min] 320 °C, 5 min | 19,9 | 19,9 | 17,0 | 13,6 | 13,4 | 16,3 |
| MVR in [cm³/10 min] 320 °C, 5 min | 22,7 | 23,5 | 18,4 | 14,5 | 14,6 | 20,2 |
| Izod Kerb. 23 °C [kJ/m²] | 24 | 24 | 27 | 27 | 27 | 10 |
| Durchstoßtest (Energie bis Bruch) [J] | 39,9 | 30,5 | 36,4 | 39,3 | 35,1 | 43,4 |
| UL 3,0 mm | V0 | V0 | V0 | V0 | V0 | V0 |
| UL 1,5 mm | V1 | V1 | V-not | V0 | V0 | V1 |

Glasfaser-haltiges Polycarbonat weist zwar gute Werte im Durchstoßtest auf, jedoch sind die Werte im Kerbschlagversuch sehr niedrig. Auf den Zusatz von PTFE, welches ggf. das Brandverhalten positiv beeinflussen kann wurde verzichtet, da dies die mechanischen Eigenschaften (auch im Durchstosstest) weiter verschlechtert hätte. Polycarbonat weist bei 300 °C eine relativ hohe Schmelzestabilität auf.
Beispiel 1 zeigt, dass durch Verwendung des erfindungsgemäßen Siloxan-haltigen Blockcokondensats eine signifikante Steigerung im Kerbschlagtest erreichbar ist. Allerdings ist das Brandverhalten ungenügend und die Schmelzestabilität überraschenderweise relativ gering (Delta MVR bei 300 °C > 1,5).
Beispiel 2 zeigt ebenfalls ein ungenügendes Brandverhalten. Ferner ist die Leistung im Durchstoßtest vergleichsweise gering. Auch die Schmelzestabilität ist ungenügend.
Beispiel 3 weist zwar verbesserte mechanische Eigenschaften auf, ist aber hinsichtlich des Brandverhaltens ungenügend.

Nur die erfindungsgemäßen Zusammensetzungen (Beispiele 4 und 5) weisen eine Kombination von guten mechanischen Eigenschaften und guten Brandverhalten auf und zeigen ferner eine hohe Schmelzestabilität.

## Patentansprüche

1. Flammwidrige, thermoplastische Formmassen enthaltend
(A) wenigstens 20 Gew.-% eines Polysiloxan-Polycarbonat-Blockcokondensats umfassend Siloxanblöcke der Struktur (1) 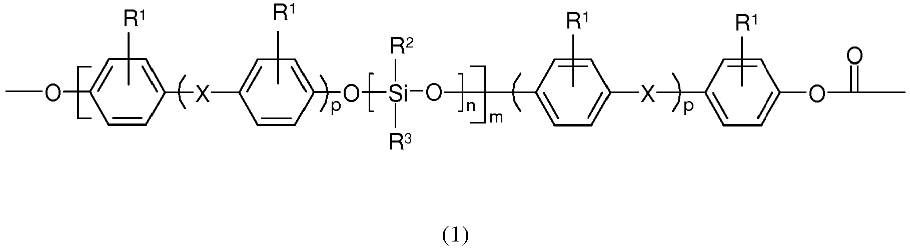 wobei
R¹ für H, Cl, Br oder C₁ bis C₄-Alkyl steht,
R² and R³ unabhängig voneinander ausgewählt sind aus Aryl, C₁ bis C₁₀-Alkyl und C₁ bis C₁₀-Alkylaryl,
X für eine Einfachbindung, -CO-, -O-, C₁- bis C₆-Alkylen, C₂ bis C₅-Alkyliden, C₅ bis C₁₂-Cycloalkyliden oder C₆ bis C₁₂-Arylen, welches mit einem weiteren aromatischen Ring enthaltend Heteroatome kondensiert sein kann, steht,
n für einen durchschnittlichen Wert von 1 bis 500,
m für einen durchschnittlichen Wert von 1 bis 10 und
p für 0 oder 1 steht,
(B) 5,0 bis 70,0 Gew.-% wenigstens eines (Co)polycarbonat basierend auf Bisphenol A und gegebenenfalls wenigstens einem weiteren Diphenol,
(C) 8,0 bis 30,0 Gew.-% Glasfasern,
(D) 0,05 bis 10,0 Gew.-% Titandioxid,
(E) 0,03 bis 0,15 Gew.-% Polytetrafluorethylen
oder 0,05 bis 0,40 Gew.-% Polytetrafluorethylen-Blends, welche 30 bis 70 Gew.-% Polytetrafluorethylen enthalten,
(F) 0,1 bis 0,6 Gew.-% wenigstens eines Sulfonsäuresalzes, und
(G) 0,05 bis 0,5 Gew.-% wenigstens eines UV-Absorber.

2. Formmassen nach Anspruch 1, **dadurch gekennzeichnet, dass** als Komponente (C) wenigstens ein Sulfonsäuresalz der allgemeinen Formeln (4) und (5) vorliegt, 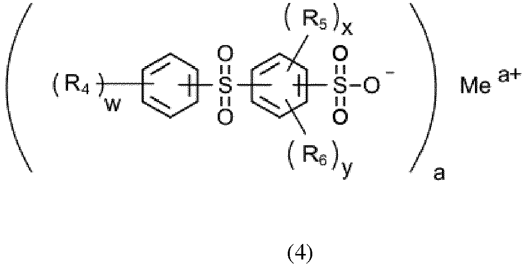 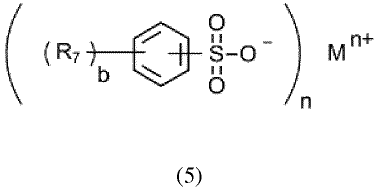 wobei
R₄, R₅, R₆ und R₇ jeweils unabhängig voneinander für einen C₁ bis C₆-Alkylrest stehen,
Me und M jeweils für ein Metall stehen,
a und n für 1, 2 oder 3 stehen,
b und w ganze Zahlen von 0 bis 5 sind, und
x und y für ganze Zahlen von 0 bis 4 stehen.

3. Formmassen nach Anspruch 1 oder 2, **dadurch gekennzeichnet, dass** als Komponente (E) Polytetrafluorethylen mit einem durchschnittlichen Partikeldurchmesser von 100 bis 1000 µm vorliegt.

4. Formmassen nach einem der vorhergehenden Ansprüche, **dadurch gekennzeichnet, dass** als Komponente (E) wenigstens ein Polytetrafluorethylen-Blend in den Formmassen enthalten ist, wobei der Polytetrafluorethylen-Blend einen Polytetrafluorethylen-Kern und eine Beschichtung aus wenigstens einem Polyvinylderivat umfasst.

5. Formmassen nach einem der vorhergehenden Ansprüche, **dadurch gekennzeichnet, dass** der UV-Absorber aus der Klasse der Hydroxyphenylbenzotriazole ist.

6. Formmassen nach Anspruch 5, wobei der UV-Absorber ausgewählt ist aus der Gruppe bestehend aus 2-(2'-Hydroxy-5'-methyl-phenyl)-benzotriazol, 2-(2'-Hydroxy-3',5'-di-t-butyl-phenyl)-benzotriazol, 2-(2'-Hydroxy-3'-tert.-butyl-5'-methyl-phenyl)-5-chlorobenzotriazol, 2-(2'-Hydroxy-3',5'-tert.-butyl-phenyl)-5-chlorobenzotriazol, 2-(2'-Hydroxy-5'-tert.-octylphenyl)-benzotriazol, 2-(2'-Hydroxy-3',5'-di-tert.-amylphenyl)-benzotriazol, 2-[2'-Hydroxy-3'-(3",4",5",6"-tetrahydro-phthalimido-ethyl)-5'-methylphenyl]-benzotriazol und 2,2'-Methylenbis [4-(1,1,3,3-tetramethylbutyl)-6-(2H-benzotriazol-2-yl)-phenol].

7. Formmassen nach Anspruch 5 oder 6, **dadurch gekennzeichnet, dass** der UV-Absorber 2-(3',5'-Bis-(1,1-dimethylbenzyl)-2'-hydroxy-phenyl)-benzotriazol ist.

8. Formmassen nach einem der vorhergehenden Ansprüche, **dadurch gekennzeichnet, dass** als Komponente (B) Homopolycarbonat basierend auf Bisphenol A enthalten ist.

9. Formmassen nach einem der vorhergehenden Ansprüche bestehend aus den Komponenten (A) bis (G) und
(H) 0,00 Gew.-% bis 1,00 Gew.-% mindestens eines Entformungsmittels; und/oder
(I) 0,00 Gew.-% bis 0,20 Gew.-% eines oder mehrerer Thermo- und/oder Verarbeitungsstabilisatoren; und/oder
(J) 0,00 bis 10,00 Gew. -% weiterer Additive, welche sich von den Komponenten (B) bis (I) unterscheiden.

10. Formmassen nach einem der vorhergehenden Ansprüche, **dadurch gekennzeichnet, dass** Komponente (A) in einer Menge von mindestens 50 Gew.-% in den Formmassen enthalten ist.

11. Formmassen nach einem der vorhergehenden Ansprüche, **dadurch gekennzeichnet, dass** das Polysiloxan-Polycarbonat-Blockcokondensat Polycarbonatblöcke basierend auf Bisphenol A aufweist.

12. Formmassen nach einem der vorhergehenden Ansprüche, **dadurch gekennzeichnet, dass** das Polysiloxan-Polycarbonat-Blockcokondensat eine oder mehrere Strukturen der Formeln (I), (II), (III) und (IV) aufweist: 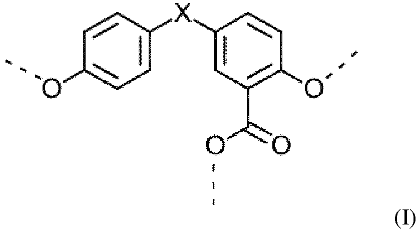 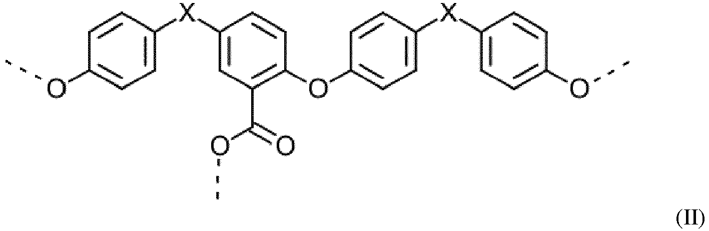 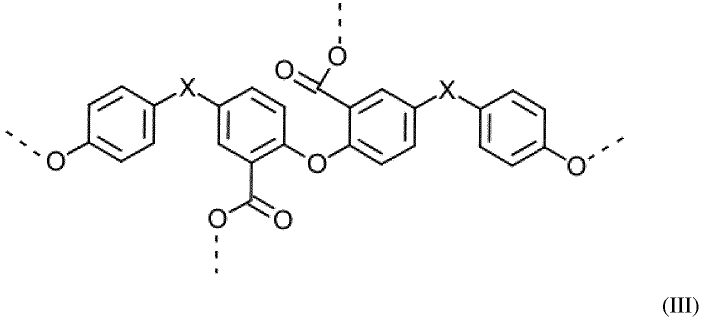 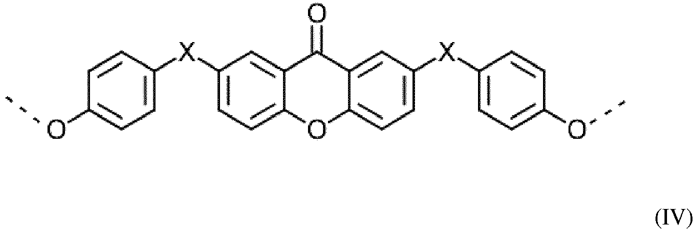 wobei
die Phenylringe unsubstituiert sind oder unabhängig voneinander mono- oder disubstituiert sind mit C₁ bis C₈-Alkyl und/oder Halogen,
X für eine Einfachbindung, C₁ bis C₆-Alkylen, C₂ bis C₅-Alkyliden oder C₅ bis C₆-Cycloalkyliden steht, und
die durch --- angedeuteten Verknüpfungen in den Struktureinheiten (I) bis (IV) jeweils Teil einer Carboxylgruppe sind.

13. Formmassen nach einem der vorhergehenden Ansprüche, **dadurch gekennzeichnet, dass** der Gehalt an Siloxanblöcken der Struktur (1) 2 bis 20 % Gew.-%, bezogen auf das Gesamtgewicht der Formmassen, beträgt.

## Claims

1. Flame-retardant, thermoplastic moulding compositions comprising
(A) at least 20% by weight of a polysiloxane-polycarbonate block cocondensate comprising siloxane blocks of the structure (1) 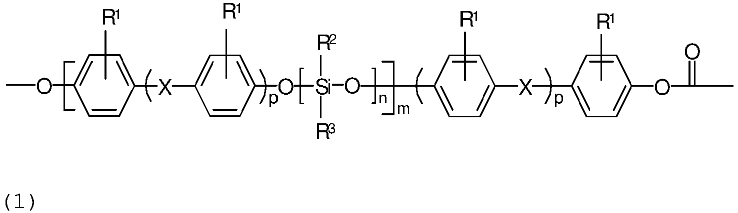 where
R¹ is H, Cl, Br or C₁ to C₄-alkyl,
R² and R³ are selected mutually independently from aryl, C₁ to C₁₀-alkyl and C₁ to C₁₀-alkylaryl,
X is a single bond, -CO-, -O-, C₁- to C₆-alkylene, C₂ to C₅-alkylidene, C₅ to C₁₂-cycloalkylidene or C₆ to C₁₂-arylene, which can have been condensed with another aromatic ring comprising heteroatoms,
n is an average value from 1 to 500,
m is an average value from 1 to 10 and
p is 0 or 1,
(B) from 5.0 to 70.0% by weight of at least one (co)polycarbonate based on bisphenol A and optionally on at least one other diphenol,
(C) from 8.0 to 30.0% by weight of glass fibres,
(D) from 0.05 to 10.0% by weight of titanium dioxide,
(E) from 0.03 to 0.15% by weight of polytetrafluoroethylene
or from 0.05 to 0.40% by weight of polytetrafluoroethylene blends which comprise from 30 to 70% by weight of polytetrafluoroethylene,
(F) from 0.1 to 0.6% by weight of at least one sulphonic salt, and
(G) from 0.05 to 0.5% by weight of at least one UV absorber.

2. Moulding compositions according to Claim 1, **characterized in that** at least one sulphonic salt of the general formulae (4) and (5) is present as component (C) 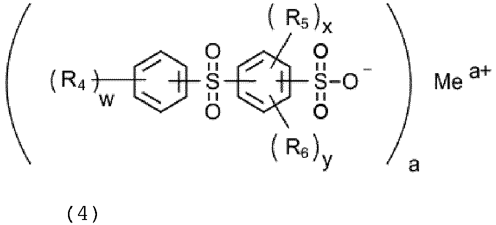 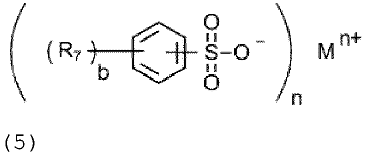 where
R₄, R₅, R₆ and R₇ are respectively mutually independently a C₁ to C₆-alkyl moiety,
Me and M are respectively a metal,
a and n are 1, 2 or 3,
b and w are integers from 0 to 5, and
x and y are integers from 0 to 4.

3. Moulding compositions according to Claim 1 or 2, **characterized in that** polytetrafluoroethylene with average particle diameter from 100 to 1000 µm is present as component (E).

4. Moulding compositions according to any of the preceding claims, **characterized in that** at least one polytetrafluoroethylene blend is present as component (E) in the moulding compositions, where the polytetrafluoroethylene blend comprises a polytetrafluoroethylene core and a coating made of at least one polyvinyl derivative.

5. Moulding compositions according to any of the preceding claims, **characterized in that** the UV absorber is from the class of the hydroxyphenylbenzotriazoles.

6. Moulding compositions according to Claim 5, where the UV absorber is selected from the group consisting of 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-tert-butylphenyl)-5-chlorobenzotriazole, 2-(2'-hydroxy-5'-tert-octylphenyl)benzotriazole, 2-(2'-hydroxy-3',5'-di-tert-amylphenyl)benzotriazole, 2-[2'-hydroxy-3'-(3",4",5",6"-tetrahydrophthalimidoethyl)-5'-methylphenyl-benzotriazole and 2,2'-methylenebis[4-(1,1,3,3-tetramethylbutyl)-6-(2H-benzotriazole-2-yl)phenol].

7. Moulding compositions according to Claim 5 or 6, **characterized in that** the UV absorber is 2-(3',5'-bis(1,1-dimethylbenzyl)-2'-hydroxyphenyl)benzotriazole.

8. Moulding compositions according to any of the preceding claims, **characterized in that** homopolycarbonate based on bisphenol A is present as component (B).

9. Moulding compositions according to any of the preceding claims composed of components (A) to (G) and
(H) from 0.00% by weight to 1.00% by weight of at least one mould-release agent; and/or
(I) from 0.00% by weight to 0.20% by weight of one or more heat stabilizers and/or processing stabilizers; and/or
(J) from 0.00 to 10.00% by weight of other additives which differ from components (B) to (I).

10. Moulding compositions according to any of the preceding claims, **characterized in that** the quantity present of component (A) in the moulding compositions is at least 50% by weight.

11. Moulding compositions according to any of the preceding claims, **characterized in that** the polysiloxane-polycarbonate block cocondensate comprises polycarbonate blocks based on bisphenol A.

12. Moulding compositions according to any of the preceding claims, **characterized in that** the polysiloxane-polycarbonate block cocondensate comprises one or more structures of the formulae (I), (II), (III) and (IV): 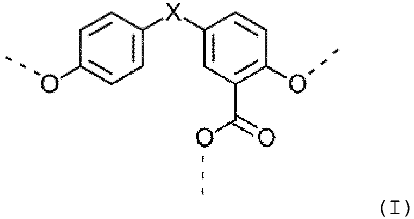 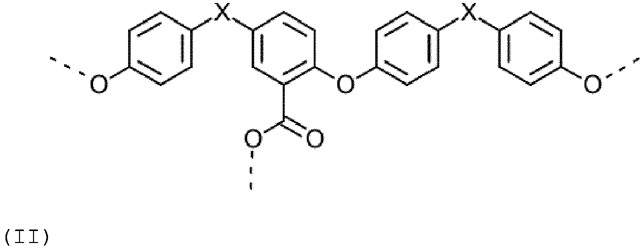 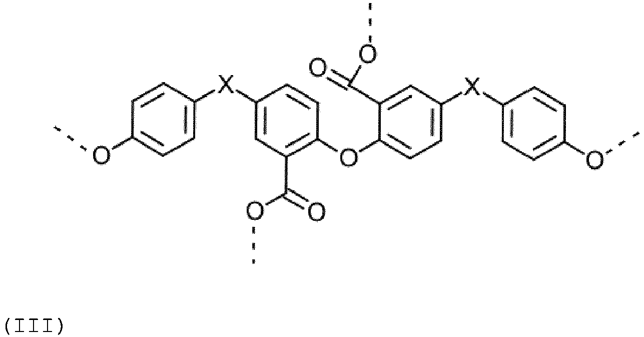 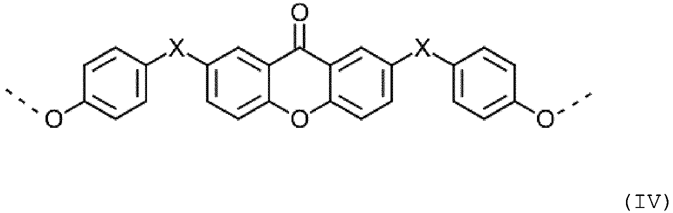 where
the phenyl rings are unsubstituted or mutually independently mono- or disubstituted with C₁ to C₈-alkyl and/or halogen,
X is a single bond, C₁ to C₆-alkylene, C₂ to C₅-alkylidene or C₅ to C₆-cycloalkylidene, and
the linkages indicated by --- in the structural units (I) to (IV) are respectively part of a carboxy group.

13. Moulding compositions according to any of the preceding claims, **characterized in that** the content of siloxane blocks of the structure (1) is from 2 to 20% by weight, based on the total weight of the moulding compositions.

## Revendications

1. Masses à mouler ignifuges, thermoplastiques contenant
(A) au moins 20 % en poids d'un cocondensat à blocs polysiloxane-polycarbonate comprenant des blocs de siloxane de structure (1) 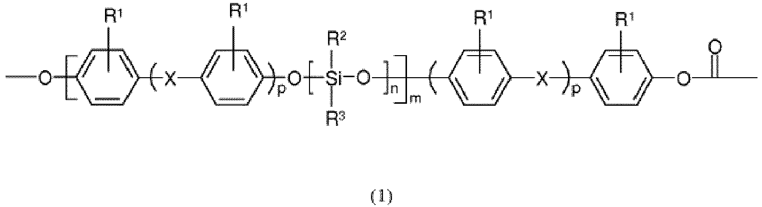
R¹ représentant H, Cl, Br ou C₁₋₄-alkyle,
R² et R³ étant choisis indépendamment l'un de l'autre parmi aryle, C₁₋₁₀-alkyle et C₁₋₁₀-alkylaryle ,
X représentant une simple liaison, -CO-, -O-, C₁₋₆-alkylène, C₂₋₅-alkylidène, C₅₋₁₂-cycloalkylidène ou C₆₋₁₂-arylène, qui peut être condensé avec un cycle aromatique supplémentaire contenant des hétéroatomes,
n représentant une valeur moyenne de 1 à 500,
m représentant une valeur moyenne de 1 à 10 et
p représentant 0 ou 1,
(B) 5,0 à 70,0 % en poids d'au moins un (co)polycarbonate à base de bisphénol A et éventuellement d'au moins un diphénol supplémentaire,
(C) 8,0 à 30,0 % en poids de fibres de verre,
(D) 0,05 à 10,0 % en poids de dioxyde de titane,
(E) 0,03 à 0,15 % en poids de polytétrafluoroéthylène
ou 0,05 à 0,40 % en poids de mélanges de polytétrafluoroéthylène, qui contiennent 30 à 70 % en poids de polytétrafluoroéthylène,
(F) 0,1 à 0,6 % en poids d'au moins un sel d'acide sulfonique, et
(G) 0,05 à 0,5 % en poids d'au moins un absorbant UV.

2. Masses à mouler selon la revendication 1, **caractérisées en ce qu'**en tant que composant (C), au moins un sel d'acide sulfonique des formules générales (4) et (5) est présent, 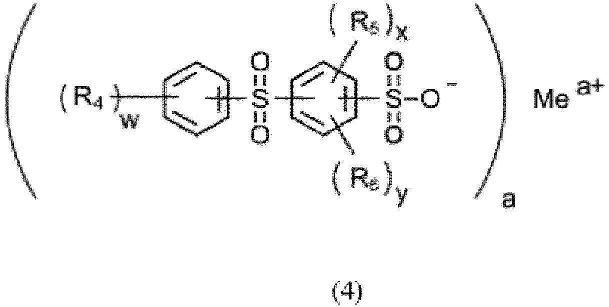 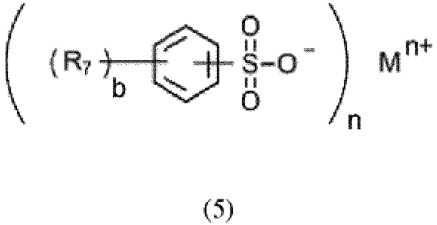
R₄, R₅, R₆ et R₇ à chaque fois indépendamment les uns des autres représentant un radical C₁₋₆-alkyle, Me et M représentant à chaque fois un métal,
a et n représentant 1, 2 ou 3,
b et w étant des nombres entiers de 0 à 5, et
x et y représentant des nombres entiers de 0 à 4.

3. Masses à mouler selon la revendication 1 ou 2, **caractérisées en ce qu'**en tant que composant (E), un polytétrafluoroéthylène doté d'un diamètre moyen de particule de 100 à 1000 µm est présent.

4. Masses à mouler selon l'une quelconque des revendications précédentes, **caractérisées en ce qu'**en tant que composant (E) au moins un mélange de polytétrafluoroéthylène est contenu dans les masses à mouler, le mélange de polytétrafluoroéthylène comprenant un noyau de polytétrafluoroéthylène et un revêtement composé d'au moins un dérivé de polyvinyle.

5. Masses à mouler selon l'une quelconque des revendications précédentes, **caractérisées en ce que** l'absorbant UV est de la classe des hydroxyphénylbenzotriazoles.

6. Masses à mouler selon la revendication 5, l'absorbant UV étant choisi dans le groupe constitué par le 2-(2'-hydroxy-5'-méthyl-phényl)-benzotriazole, le 2-(2'-hydroxy-3',5'-di-t-butyl-phényl)benzotriazole, le 2-(2'-hydroxy-3'-tert.-butyl-5'-méthyl-phényl)-5-chlorobenzotriazole, le 2-(2'-hydroxy-3',5'-tert.-butyl-phényl)-5-chlorobenzotriazole, le 2-(2'-hydroxy-5'-tert.-octylphényl)-benzotriazole, le 2-(2'-hydroxy-3',5'-di-tert.-amylphényl)-benzotriazole, le 2-[2'-hydroxy-3'-(3",4",5",6"-tétrahydrophtalimido-éthyl)-5'-méthylphényl]-benzotriazole et le 2,2'-méthylènebis[4-(1,1,3,3-tétraméthylbutyl)-6-(2H-benzotriazol-2-yl)phénol].

7. Masses à mouler selon la revendication 5 ou 6, **caractérisées en ce que** l'absorbant UV est le 2- (3',5'-bis-(1,1-diméthylbenzyl)-2'-hydroxy-phényl)-benzotriazole.

8. Masses à mouler selon l'une quelconque des revendications précédentes, **caractérisées en ce qu'**en tant que composant (B) un homopolycarbonate à base de bisphénol A est contenu.

9. Masses à mouler selon l'une quelconque des revendications précédentes, constituées des composants (A) à (G) et
(H) 0,00 % en poids à 1,00 % en poids d'au moins un agent de démoulage ; et/ou
(I) 0,00 % en poids à 0,20 % en poids d'un ou plusieurs thermostabilisants et/ou stabilisants de traitement ; et/ou
(J) 0,00 à 10,00 % en poids d'additifs supplémentaires qui sont différents des composants (B) à (I).

10. Masses à mouler selon l'une quelconque des revendications précédentes, **caractérisées en ce que** le composant (A) est contenu en une quantité d'au moins 50 % en poids dans les masses à mouler.

11. Masses à mouler selon l'une quelconque des revendications précédentes, **caractérisées en ce que** le cocondensat à blocs polysiloxane-polycarbonate présente des blocs de polycarbonate à base de bisphénol A.

12. Masses à mouler selon l'une quelconque des revendications précédentes, **caractérisées en ce que** le cocondensat à blocs polysiloxane-polycarbonate présente une ou plusieurs structures des formules (I), (II), (III) et (IV) : 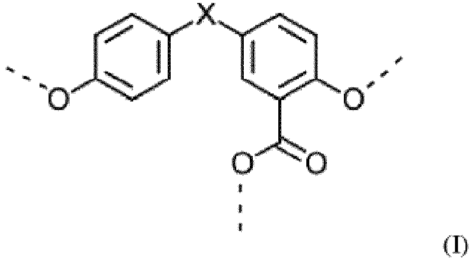 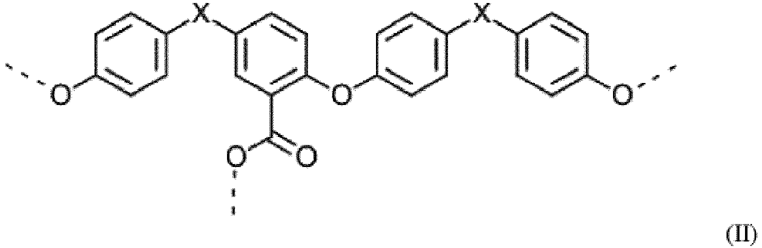 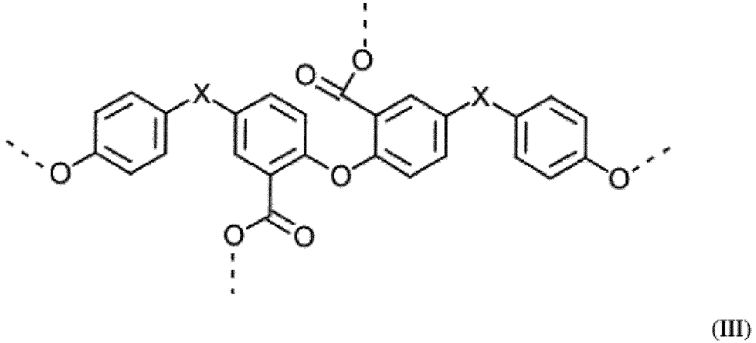 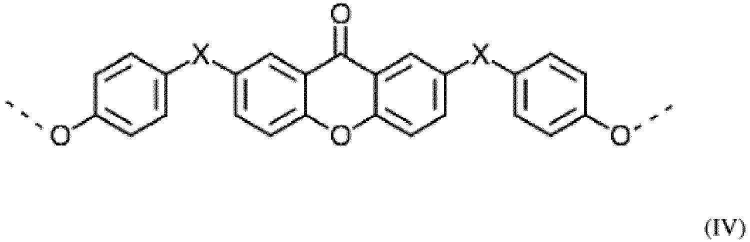
les cycles phényle étant non substitués ou étant indépendamment les uns des autres monosubstitués ou disubstitués par C₁₋₈-alkyle et/ou halogène,
X représentant une simple liaison, C₁₋₆-alkylène, C₂₋₅-alkylidène ou C₅₋₆-cycloalkylidène, et
les liens indiqués par --- dans les motifs structuraux (I) à (IV) faisant à chaque fois partie d'un groupe carboxyle.

13. Masses à mouler selon l'une quelconque des revendications précédentes, **caractérisées en ce que** la teneur en blocs siloxane de la structure (1) est de 2 à 20 % en poids, par rapport au poids total des masses à mouler.
